# EUROPEAN PATENT APPLICATION

(11) **EP 4 487 938 A1**
(43) Date of publication of application: **08.01.2025**
(21) Application number: 22928869.1
(22) Date of filing: 31.10.2022
(51) Int. Cl.: B01D 53/22

(54) **MEMBRANE MODULE**

(30) Priority: 28.02.2022 JP 2022029393
(71) Applicant: NGK Insulators, Ltd., Nagoya-shi, Aichi 467-8530 (JP)
(72) Inventor: NAKAGAWA, Kosuke, Nagoya-shi, Aichi 467-8530 (JP); IIDA, Kazuki, Nagoya-shi, Aichi 467-8530 (JP); KAN, Hirofumi, Nagoya-shi, Aichi 467-8530 (JP); TORII, Atsushi, Nagoya-shi, Aichi 467-8530 (JP); SHIOMI, Makoto, Nagoya-shi, Aichi 467-8530 (JP); SHIBAGAKI, Yukinari, Nagoya-shi, Aichi 467-8530 (JP); SHIMIZU, Katsuya, Nagoya-shi, Aichi 467-8530 (JP)
(74) Representative: Müller-Boré & Partner Patentanwälte PartG mbB
(86) International application number: PCT/JP2022/040803
(87) International publication number: WO 2023/162351

(57) **Abstract**

A membrane module (2) includes a housing (3), a reactor (1) housed in the housing (3), a first sealing portion (4) sealing a gap between the housing (3) and the reactor (1), and a refrigerant flow path (7) configured to cool a portion of the housing (3) in contact with the first sealing portion (4).

## Description

### TECHNICAL FIELD

The present invention relates to a membrane module.

### BACKGROUND ART

Conventionally, a membrane module provided with a housing and a membrane structure housed in the housing is known. A separation membrane structure (see Patent Literature 1, for example) is an example of a membrane structure.

### CITATION LIST

### Patent Literature

Patent Literature 1: WO 2018/180095

### SUMMARY

### TECHNICAL PROBLEM

In the membrane module described in Patent Literature 1, a sealing portion (e.g., an O-ring) for sealing a gap between the housing and the membrane structure is provided in order to fix the membrane structure inside the housing.

However, in the case where separation needs to be performed at a high temperature, since the housing thermally expands more easily than the membrane structure, the sealing performance of the sealing portion may decrease. Such a problem is not limited to the case where the membrane structure is a separation membrane structure, and may also occur when the membrane structure is a reactor or the like.

An object of the present invention is to provide a membrane module capable of suppressing a decrease in the sealing performance of a sealing portion.

### SOLUTION TO PROBLEM

A membrane module according to a first aspect of the present invention is a membrane module including a housing, a membrane structure housed in the housing, a sealing portion configured to seal a gap between the housing and the membrane structure, and a cooling portion configured to cool a portion of the housing in contact with the sealing portion.

A membrane module according to a second aspect of the present invention is the membrane module according to the first aspect, in which the cooling portion is a refrigerant flow path in which a refrigerant circulates.

A membrane module according to a third aspect of the present invention is the membrane module according to the second aspect, in which the refrigerant flow path is disposed outside the housing.

A membrane module according to a fourth aspect of the present invention is the membrane module according to claim 1, in which the cooling portion is a heat dissipation fin formed on an outer surface of the housing.

A membrane module according to a fifth aspect of the present invention is the membrane module according to the first aspect, in which the cooling portion is a ventilation hole formed in the housing or the sealing portion.

A membrane module according to a sixth aspect of the present invention is the membrane module according to any one of the first to fifth aspects, in which the membrane structure is a reactor having a separation membrane permeable to water vapor, the water vapor being a product of a conversion reaction in which a source gas containing hydrogen and carbon dioxide is converted to a liquid fuel.

A membrane module according to a seventh aspect of the present invention is the membrane module according to any one of the first to fifth aspects, wherein the membrane structure is a separation membrane structure having a separation membrane permeable to a desired component contained in a mixed fluid.

A membrane module according to an eighth aspect of the present invention is the membrane module according to any one of the first to seventh aspects, in which the sealing portion can move in a longitudinal direction together with the membrane structure.

A membrane module according to a ninth aspect of the present invention is the membrane module according to the seventh aspect, in which the sealing portion is an O-ring constituted by an elastic member.

A membrane module according to a tenth aspect of the present invention is the membrane module according to the eighth aspect, in which the sealing portion includes an annular fixed portion fixed to an inner surface of the housing and having an inclined surface facing a side surface of the membrane structure, and an annular abutting portion attached to the side surface and abutting the inclined surface.

### ADVANTAGEOUS EFFECTS

According to the present invention, it is possible to provide a membrane module capable of suppressing a decrease in the sealing performance of a sealing portion.

### BRIEF DESCRIPTION OF DRAWINGS

FIG. 1 is a transparent side view of a membrane module according to a first embodiment.
FIG. 2 is a perspective view of a reactor according to the first embodiment.
FIG. 3 is a cross-sectional view taken along A-A in FIG. 2.
FIG. 4 is a cross-sectional view taken along B-B in FIG. 2.
FIG. 5 is a cross-sectional view taken along C-C in FIG. 3.
FIG. 6 is a transparent side view of a membrane module according to a second embodiment.
FIG. 7 is a transparent side view of a membrane module according to Modification 1.
FIG. 8 is a transparent side view of the membrane module according to Modification 1.
FIG. 9 is a transparent side view of a membrane module according to Modification 6.
FIG. 10 is a cross-sectional view of a membrane module according to Modification 7.
FIG. 11 is a cross-sectional view of the membrane module according to Modification 7.

### DESCRIPTION OF EMBODIMENTS

### 1. First Embodiment

### Membrane Module 2

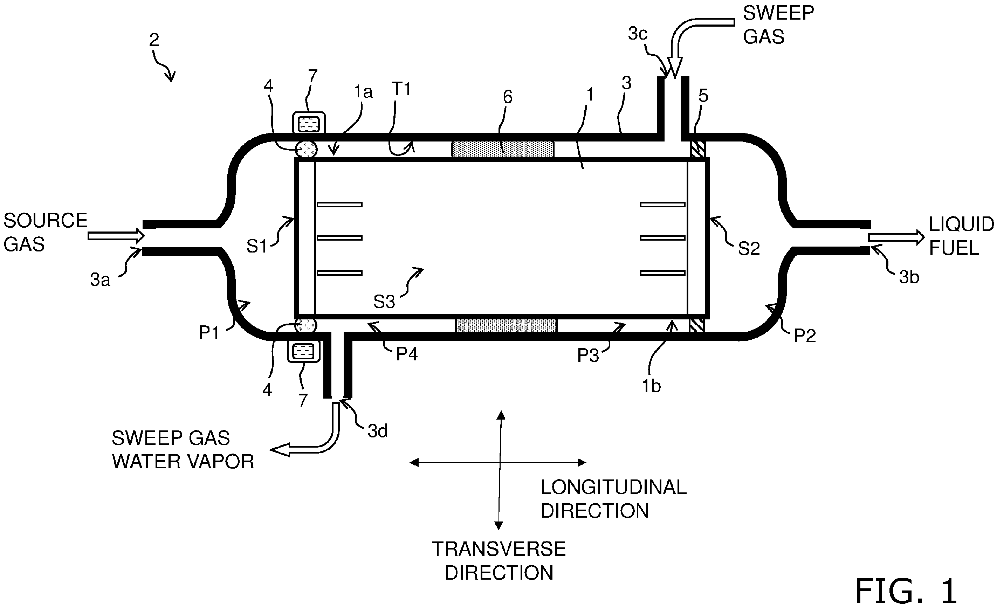

A membrane module 2 according to a first embodiment will be described. FIG. 1 is a transparent side view of the membrane module 2.

As shown in FIG. 1, the membrane module 2 includes a reactor 1, a housing 3, a first sealing portion 4, a second sealing portion 5, a flow stopper 6, and a refrigerant flow path 7.

### Reactor 1

The reactor 1 is an example of a "membrane structure" according to the present invention. The reactor 1 is housed in the housing 3. The external shape of the reactor 1 has a columnar shape extending in a longitudinal direction.

The reactor 1 is a so-called membrane reactor for converting a source gas into a liquid fuel. The source gas contains at least hydrogen and carbon dioxide. The source gas may contain carbon monoxide. The source gas may be a so-called synthesis gas (syngas). The liquid fuel is a fuel that is in a liquid state at normal temperature and normal pressure or a fuel that can be liquefied at normal temperature in a pressurized state. Examples of fuels that are in a liquid state at normal temperature and normal pressure include methanol, ethanol, a liquid fuel represented by CₙH₂₍ₘ₋₂ₙ₎ (m is an integer smaller than 90, and n is an integer smaller than 30), and a mixture of these. Examples of fuels that can be liquefied at normal temperature in a pressurized state include propane, butane, and a mixture of these.

For example, a reaction formula (1) for the synthesis of methanol through catalytic hydrogenation of a source gas containing hydrogen and carbon dioxide in the presence of a catalyst is expressed as follows.

CO₂+3H₂ ⇔ CH₃OH+H₂O (1)

The above reaction is an equilibrium reaction, and the reactor 1 can shift the reaction equilibrium to the product side by separating water vapor, which is one of products of the conversion reaction. In order to increase the conversion efficiency and the reaction rate, the reaction is preferably carried out at a high temperature and a high pressure (e.g., 180°C or higher and 2 MPa or higher). The liquid fuel is in a gaseous state when it is synthesized, and remains in the gaseous state at least until the liquid fuel flows out from the reactor 1. It is preferable that the reactor 1 has heat resistance and pressure resistance suitable for synthesis conditions of the desired liquid fuel.

As described later, the reactor 1 is mainly constituted by a ceramic material. The specific configuration of the reactor 1 will be described later.

### Housing 3

The housing 3 houses the reactor 1. The inside of the housing 3 is partitioned into first to fourth spaces P1 to P4 by the first sealing portion 4, the second sealing portion 5, and the flow stopper 6. The housing 3 includes a source gas supply port 3a, a liquid fuel discharge port 3b, a sweep gas supply port 3c, and a sweep gas discharge port 3d.

The source gas is supplied to the first space P1 via the source gas supply port 3a. The source gas flows into the reactor 1 from the first space P1. The liquid fuel flows out from the reactor 1 to the second space P2. The liquid fuel that has flown out to the second space P2 is discharged to the outside via the liquid fuel discharge port 3b.

The sweep gas is supplied to the third space P3 via the sweep gas supply port 3c. The sweep gas flows into the reactor 1 from the third space P3. The sweep gas that has taken in water vapor in the reactor 1 flows out to the fourth space P4 from the reactor 1. The sweep gas that has flown out to the fourth space P4 is discharged to the outside via the sweep gas discharge port 3d.

Note that in FIG. 1, the sweep gas supply port 3c is disposed on the side opposite to the sweep gas discharge port 3d with respect to the axis of the reactor 1. In this manner, since the length of each of the flow paths of the sweep gas that flows from the sweep gas supply port 3a to the sweep gas discharge port 3b via the later-described second flow path 12 can be made equal, maldistribution of flows of the sweep gas can be suppressed. Note that the positional relationship between the sweep gas supply port 3c and the sweep gas discharge port 3d can be changed as appropriate.

The housing 3 is mainly constituted by a metal material (e.g., stainless steel). In the present embodiment, a case is assumed in which the coefficient of thermal expansion of the housing 3 is larger than the coefficient of thermal expansion of the reactor 1. Accordingly, the housing 3 thermally expands more easily than the reactor 1.

In this manner, in the case where the housing 3 thermally expands more easily than the reactor 1, as a result of the housing 3 expanding more significantly in a transverse direction (direction orthogonal to the longitudinal direction) than the reactor 1, the sealing performance of the first sealing portion 4 may decrease. In view of this, as described later, by attaching the refrigerant flow path 7 to the housing 3, a decrease in the sealing performance of the first sealing portion 4 is suppressed.

"The housing 3 thermally expands more easily than the reactor 1" means that the ratio of a real TE (Thermal Expansion) of the housing 3 in the longitudinal direction to a real TE of the reactor 1 in the longitudinal direction (hereinafter, "real TE ratio") is greater than 1.

The real TE of the reactor 1 is the product of the thermal expansion coefficient (CTE) of the reactor 1 in the longitudinal direction and the difference (dT) between the operation temperature of the membrane module 2 and room temperature. The real TE of the housing 3 is the product of the thermal expansion coefficient of the housing 3 in the longitudinal direction and the difference (dT) between the operation temperature of the membrane module 2 and room temperature.

The real TE ratio is preferably 3 or smaller. In this manner, since the difference in the thermal expansion between the housing 3 and the reactor 1 can be reduced, a decrease in the sealing performance of the first sealing portion 4 can be further suppressed.

### First Sealing Portion 4

The first sealing portion 4 is an example of a "sealing portion" according to the present invention. The first sealing portion 4 seals a gap between the housing 3 and a first end portion 1a of the reactor 1. The first sealing portion 4 holds the first end portion 1a of the reactor 1. In the present embodiment, the first sealing portion 4 has an annular shape.

The first sealing portion 4 is an O-ring made of an elastic member. Examples of the elastic member include rubber, resin, and metal. It is preferable that the first sealing portion 4 is compressed between a side surface S3 of the reactor 1 and an inner surface T1 of the housing 3.

The first sealing portion 4 is in contact with the side surface S3 of the reactor 1 and the inner surface T1 of the housing 3. When the reactor 1 moves in the longitudinal direction relative to the housing 3, the first sealing portion 4 can move in the longitudinal direction. For this reason, even if the reactor 1 moves in the longitudinal direction relative to the housing 3, the seal between the housing 3 and the first end portion 1a of the reactor 1 can be maintained.

### Second Sealing Portion 5

The second sealing portion 5 seals a gap between the housing 3 and a second end portion 1b of the reactor 1. The second sealing portion 5 holds the second end portion 1b of the reactor 1. The second sealing portion 5 is connected to the side surface S3 of the reactor 1 and the inner surface T1 of the housing 3. In the present embodiment, the second sealing portion 5 has an annular shape.

Since the second space P2 side of the second sealing portion 5 is exposed to a high temperature liquid fuel and water vapor, the constituent material for the second sealing portion 5 is required to have tolerance against chemical load of a high temperature liquid fuel and water vapor. Examples of the constituent material for the second sealing portion 5 include glass, silver solder, solder, and inorganic adhesive. Rubber and plastic are not suitable for the constituent material of the second sealing portion 5.

### Flow Stopper 6

A flow stopper 6 is disposed between the reactor 1 and the housing 3. The flow stopper 6 is disposed between the third space P3 and the fourth space P4. In the present embodiment, the flow stopper 6 has an annular shape.

The flow stopper 6 suppresses the flow of the sweep gas from the third space P3 to the fourth space P4. Note that the flow stopper 6 only needs to suppress the flow of the sweep gas, and does not need to seal the space between the reactor 1 and the housing 3. The flow stopper 6 may be constituted of a material such as expanded graphite, rubber, and resin.

### Refrigerant Flow Path 7

The refrigerant flow path 7 is an example of a "cooling portion" according to the present invention. The refrigerant flow path 7 is attached to a portion of the housing 3 that comes in contact with the first sealing portion 4. Refrigerant (liquid or gas) circulates inside the refrigerant flow path 7.

The refrigerant flow path 7 cools the portion of the housing 3 that comes in contact with the first sealing portion 4. In this manner, since transverse thermal expansion of the portion of the housing 3 that comes in contact with the first sealing portion 4 can be locally suppressed, a decrease in the surface pressure between the housing 3 and the first sealing portion 4 can be suppressed. As a result, a decrease in the sealing performance of the first sealing portion 4 can be suppressed.

In the present embodiment, the refrigerant flow path 7 is disposed outside the housing 3. For this reason, since the refrigerant flow path 7 does not need to have a pressure-resistant structure, the configuration of the membrane module 2 can be simplified.

### Detailed Configuration of Reactor 1

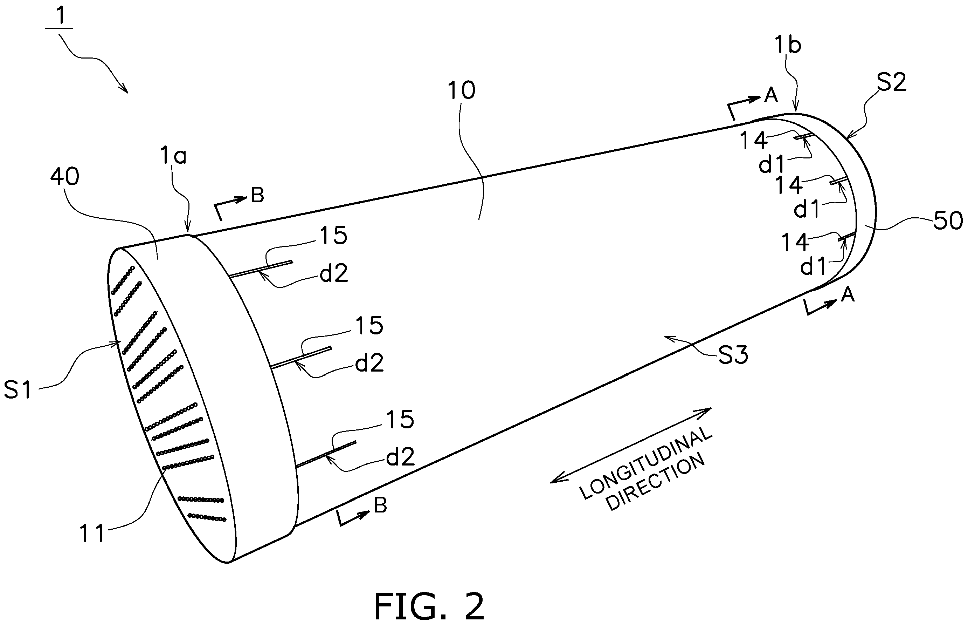

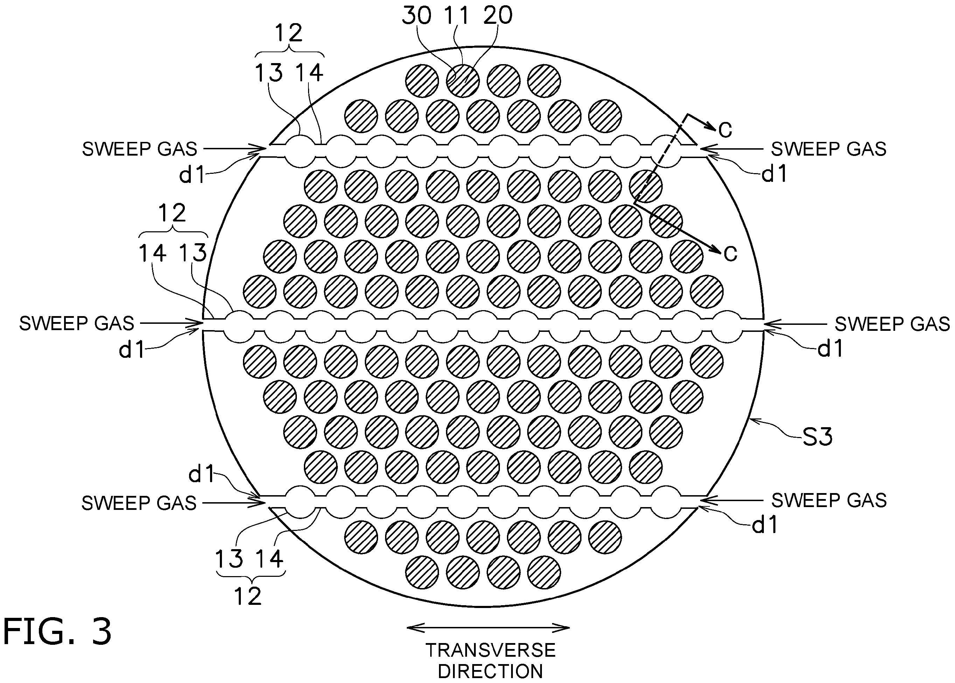

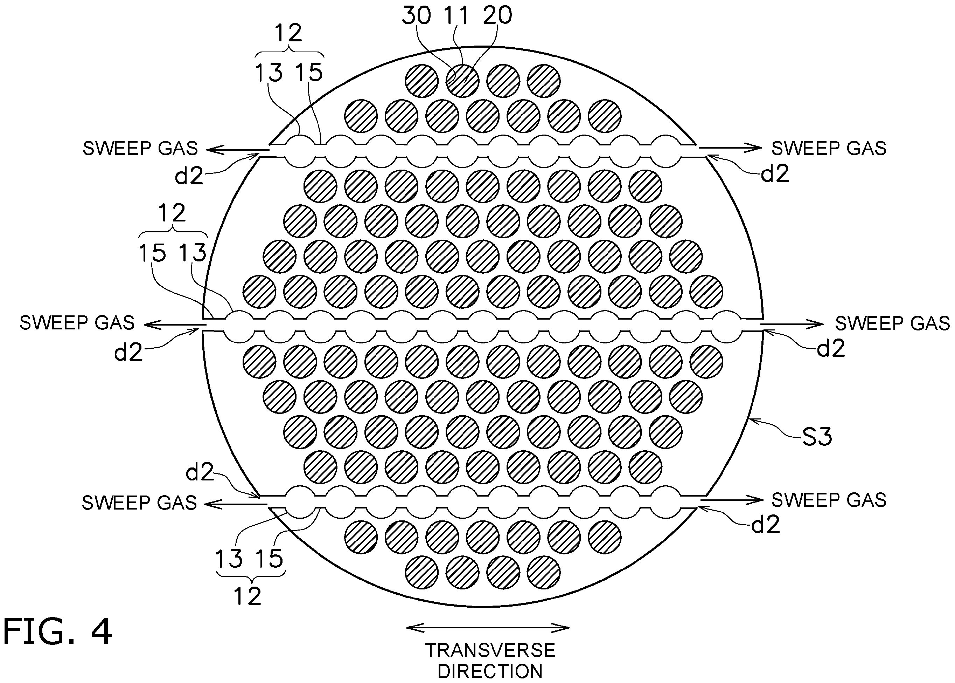

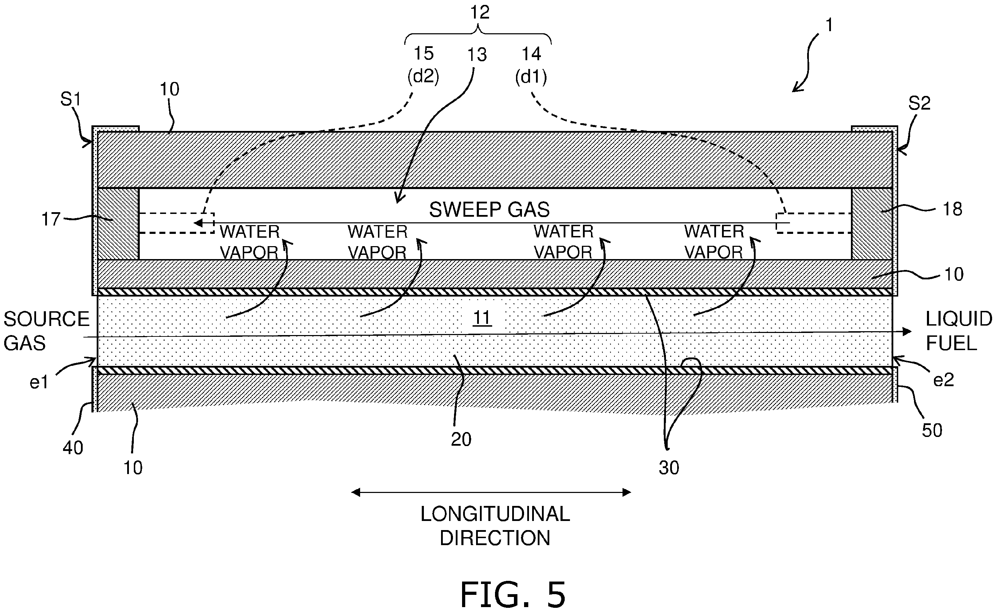

Next, the detailed configuration of the reactor 1 according to the present embodiment will be described. FIG. 2 is a perspective view of the reactor 1. FIG. 3 is a cross-sectional view taken along A-A in FIG. 2. FIG. 4 is a cross-sectional view taken along B-B in FIG. 2. FIG. 5 is a cross-sectional view taken along C-C in FIG. 3.

As shown in FIG. 2, the reactor 1 has a monolith shape. The term "monolith" means a shape that includes a plurality of holes extending through the reactor in the longitudinal direction, and encompasses a honeycomb shape. In the present embodiment, the reactor 1 has a circular column shape, but the external shape of the reactor 1 is not particularly limited.

The reactor 1 includes a first end portion 1a and a second end portion 1b. The first end portion 1a extends from an end of the reactor 1 in the longitudinal direction by a length of 2/5 of the entire length of the reactor 1 in the longitudinal direction. The second end portion 1b extends from the other end of the reactor 1 in the longitudinal direction by a length of 2/5 of the entire length of the reactor 1 in the longitudinal direction. In the present embodiment, the source gas flows into the reactor 1 from the first end portion 1a side, and the liquid fuel flows out of the reactor 1 from the second end portion 1b side.

The reactor 1 has a first end surface S1, a second end surface S2, and a side surface S3. The first end surface S1 is the end surface on the first end portion 1a side. The second end surface S2 is the end surface on the second end portion 1b side. The first end surface S1 is opposite to the second end surface S2. The side surface S3 is continuous to outer edges of the first end surface S1 and the second end surface S2.

As shown in FIGS. 2 to 4, the reactor 1 includes a porous support 10, a catalyst 20, a separation membrane 30, a first seal portion 40, and a second seal portion 50.

The porous support 10 is a columnar body extending in the longitudinal direction of the reactor 1. The porous support 10 is constituted by a porous material.

A ceramic material, a metallic material, a resin material, or the like can be used as the porous material, and a ceramic material is particularly favorable. At least one of alumina (Al₂O₃), titania (TiO₂), mullite (Al₂O₃· SiO₂), potsherd, and cordierite (Mg₂Al₄Si₅O₁₈) can be used as an aggregate for the ceramic material. At least one of titania, mullite, easily sinterable alumina, silica, glass frit, a clay mineral, and easily sinterable cordierite can be used as an inorganic binder for the ceramic material. However, the ceramic material need not necessarily contain an inorganic binder.

As shown in FIGS. 3 and 4, the porous support 10 includes a large number of first flow paths 11 and a plurality of second flow paths 12.

Each first flow path 11 is formed along the longitudinal direction of the reactor 1 as shown in FIG. 5. Each first flow path 11 is a space on a non-permeation side of the separation membrane 30. The source gas is caused to flow through the first flow paths 11. The source gas is caused to flow through the first flow paths 11. Each first flow path 11 is open in the first end surface S1 and the second end surface S2 of the reactor 1. Each first flow path 11 includes an inlet port e1 for the source gas formed in the first end surface S1 and an outlet port e2 for the liquid fuel formed in the second end surface S2. The catalyst 20 is disposed inside each first flow path 11. The number of first flow paths 11, their positions, shape, and the like can be changed as appropriate.

Each second flow path 12 is a space on a permeation side of the separation membrane 30. A sweep gas for sweeping water vapor that has passed through the separation membrane 30 is caused to flow through the second flow paths 12. Inert gas (e.g., nitrogen), air, or the like can be used as the sweep gas. The number of second flow paths 12, their positions, shape, and the like can be changed as appropriate.

As shown in FIGS. 3 and 4, each second flow path 12 is constituted by a plurality of cells 13, an inlet slit 14, and an outlet slit 15.

The plurality of cells 13 are lined up along a line extending in a transverse direction (a direction perpendicular to the longitudinal direction) of the reactor 1. Each cell 13 is formed along the longitudinal direction of the reactor 1 as shown in FIG. 5. Both ends of the cells 13 are sealed by first and second opening sealing portions 17 and 18. The first and second opening sealing portions 17 and 18 can be constituted by the porous material described above.

As shown in FIG. 2, the inlet slit 14 is formed in the second end portion 1b of the reactor 1 in the longitudinal direction. As shown in FIG. 3, the inlet slit 14 is formed along the transverse direction of the reactor 1. The inlet slit 14 extends through the plurality of cells 13. Both ends of the inlet slit 14 are open in the side surface S3. The inlet slit 14 includes a pair of inlet ports d1 formed in the side surface S3. The pair of inlet ports d1 correspond to an end of the second flow path 12 in the longitudinal direction.

As shown in FIG. 2, the outlet slit 15 is formed in the first end portion 1a of the reactor 1 in the longitudinal direction. As shown in FIG. 4, the outlet slit 15 is formed along the transverse direction of the reactor 1. The outlet slit 15 extends through the plurality of cells 13. Both ends of the outlet slit 15 are open in the side surface S3. The outlet slit 15 includes a pair of discharge ports d2 formed in the side surface S3. The pair of discharge ports d2 correspond to the other end of the second flow path 12 in the longitudinal direction.

The catalyst 20 is disposed inside each first flow path 11. The catalyst 20 preferably fills each first flow path 11, but may also be disposed so as to form a layer on the surface of the separation membrane 30. The catalyst 20 promotes the conversion reaction in which the source gas is converted into the liquid fuel, shown in the above formula (1).

A known catalyst suitable for the conversion reaction for obtaining the desired liquid fuel can be used as the catalyst 20. Examples of the catalyst 20 include metal catalysts (copper, palladium, etc.), oxide catalysts (zinc oxide, zirconia, gallium oxide, etc.), and composites of these (copper-zinc oxide, copper-zinc oxide-alumina, copper-zinc oxide-chromium oxide-alumina, copper-cobalt-titania, and these catalysts modified with palladium, etc.).

The separation membrane 30 is supported by the porous support 10. The separation membrane 30 surrounds the first flow paths 11. The separation membrane 30 is disposed between the first flow paths 11 and the second flow paths 12.

The separation membrane 30 is permeable to water vapor, which is one of the products generated as a result of the conversion reaction in which the source gas is converted into the liquid fuel. Thus, the reaction equilibrium of the above formula (1) can be shifted to the product side by utilizing an equilibrium shift effect.

It is preferable that the separation membrane 30 has a water vapor permeability coefficient of 100 nmol/(s·Pa·m²) or more. The water vapor permeability coefficient can be obtained using a known method (see Ind. Eng. Chem. Res., 40, 163-175(2001)).

It is preferable that the separation membrane 30 has a separation coefficient of 100 or more. The greater the separation coefficient, the easier it is for water vapor to pass through the separation membrane 30 and the more difficult it is for components (hydrogen, carbon dioxide, the liquid fuel, etc.) other than water vapor to pass through the separation membrane 30. The separation coefficient can be obtained using a known method (see FIG. 1 in "Separation and Purification Technology 239 (2020) 116533").

An inorganic membrane can be used as the separation membrane 30. Inorganic membranes have heat resistance, pressure resistance, and water vapor resistance and thus are preferable. Examples of inorganic membranes include zeolite membranes, silica membranes, alumina membranes, and composite membranes thereof. In particular, LTA-type zeolite membranes in which a molar ratio (Si/Al) between silicon element (Si) and aluminum element (Al) is 1.0 or more and 3.0 or less have excellent water vapor permeability and thus are favorable.

As shown in FIG. 2, the first seal portion 40 covers the first end surface S1 and a portion of the end surface S1 of the porous support 10. The first seal portion 40 suppresses intrusion of the source gas into the porous support 10. As shown in FIG. 5, the first seal portion 40 is formed so as not to close the inlet ports e1 of the first flow paths 11. The first seal portion 40 covers the first opening sealing portion 17. The first seal portion 40 can be constituted by glass, metal, rubber, resin, or the like.

As shown in FIG. 2, the second seal portion 50 covers the second end surface S2 and a portion of the end surface S1 of the porous support 10. The second seal portion 50 suppresses intrusion of the liquid fuel into the porous support 10. As shown in FIG. 5, the second seal portion 50 is formed so as not to close the outlet ports e2 of the first flow paths 11. The second seal portion 50 covers the second opening sealing portion 18. The second seal portion 50 can be constituted by glass, metal, rubber, resin, or the like.

### Method for Synthesizing Liquid Fuel Using Reactor 1

The following describes a method for synthesizing the liquid fuel using the reactor 1 with reference to FIG. 5.

The method for synthesizing the liquid fuel using the reactor 1 includes a step of causing the sweep gas to flow through the second flow paths 12 provided on the permeation side of the separation membrane 30 while causing the source gas to flow through the first flow paths 11 provided on the non-permeation side of the separation membrane 30.

The source gas flows into the first flow paths 11 from the inlet ports e1 of the first flow paths 11. In the first flow paths 11, water vapor is generated together with the liquid fuel as shown in the above formula (1). The synthesized liquid fuel flows out from the outlet ports e2 of the first flow paths 11. Water vapor, which is one of the products, passes through the separation membrane 30 and the porous support 10 in this order, and enters the second flow paths 12.

The sweep gas flows into the inlet ports d1 of the inlet slits 14 and then flows into the cells 13 from the inlet slits 14. Then, the sweep gas that has flowed into the cells 13 from the inlet slits 14 takes on water vapor that has passed through the separation membrane 30, and flows through the cells 13 toward the outlet slits 15 while absorbing reaction heat generated in the conversion reaction. The sweep gas that has reached the outlet slits 15 is discharged from the discharge ports d2 of the outlet slits 15.

As shown in FIG. 5, in the present embodiment, the direction of flows of the sweep gas in the second flow paths 12 is opposite to the direction of flows of the source gas in the first flow paths 11 in a side view of the separation membrane 30. That is, the sweep gas flows through the second flow paths 12 in a direction opposite to the direction in which the source gas flows through the first flow paths 11.

However, the direction of flows of the sweep gas in the second flow paths 12 may be the same as the direction of flows of the source gas in the first flow paths 11 in a side view of the separation membrane 30. That is, the sweep gas may flow through the second flow paths 12 in parallel to the source gas flowing through the first flow paths 11.

### 2. Second Embodiment

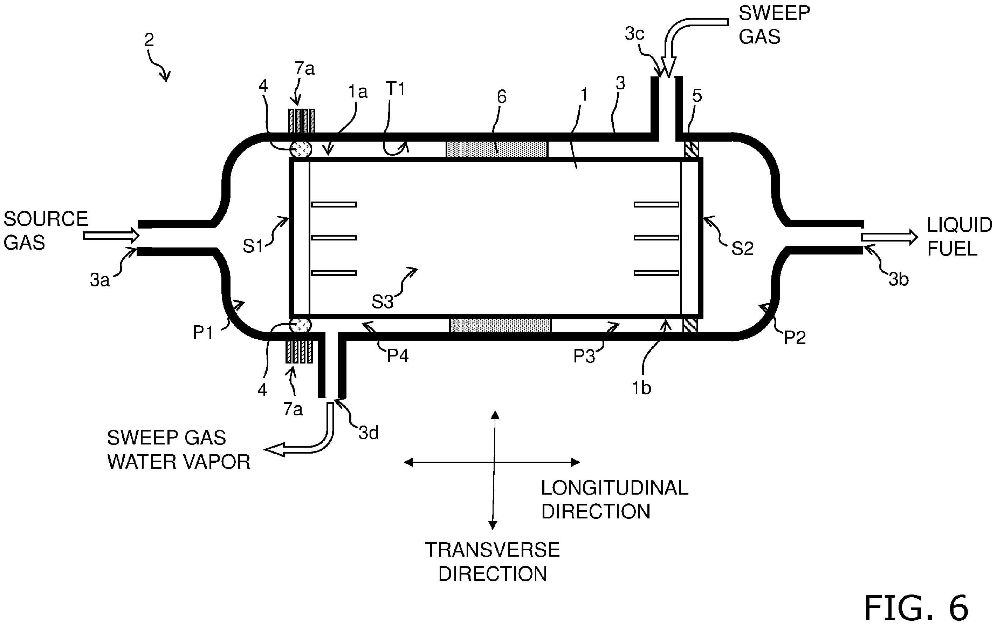

Next, a membrane module 2a according to a second embodiment will be described. FIG. 6 is a transparent side view of the membrane module 2a. The membrane module 2a according to the second embodiment differs from the membrane module 2 according to the first embodiment in that a heat dissipation fin 7a is provided instead of the refrigerant flow path 7. Therefore, the following description focuses on this difference.

The heat dissipation fin 7a is an example of a "cooling portion" according to the present invention. The heat dissipation fin 7a is attached to a portion of the housing 3 that comes in contact with the first sealing portion 4. The heat dissipation fin 7a is connected to an outer surface of the housing 3.

The heat dissipation fin 7a cools the portion of the housing 3 that comes in contact with the first sealing portion 4. In this manner, since transverse thermal expansion of the portion of the housing 3 that comes in contact with the first sealing portion 4 can be locally suppressed, a decrease in the surface pressure between the housing 3 and the first sealing portion 4 can be suppressed. As a result, a decrease in the sealing performance of the first sealing portion 4 can be suppressed.

The heat dissipation fin 7a is constituted by a plurality of fins. The fins are disposed so as to protrude from the outer surface of the housing 3. It is desirable that the fins are made of a material similar to the material of the housing 3, but there is no limitation to this configuration as long as the fins have heat dissipation capability. The shape and number of the fins are not particularly limited.

### Modifications of Embodiments

Although embodiments of the present invention have been described, the present invention is not limited to these embodiments, and various changes can be made within a scope not departing from the gist of the present invention.

### Modification 1

Although the first and second embodiments described the first sealing portion 4 as an example of a sealing portion, the configuration of the sealing portion is not limited to this.

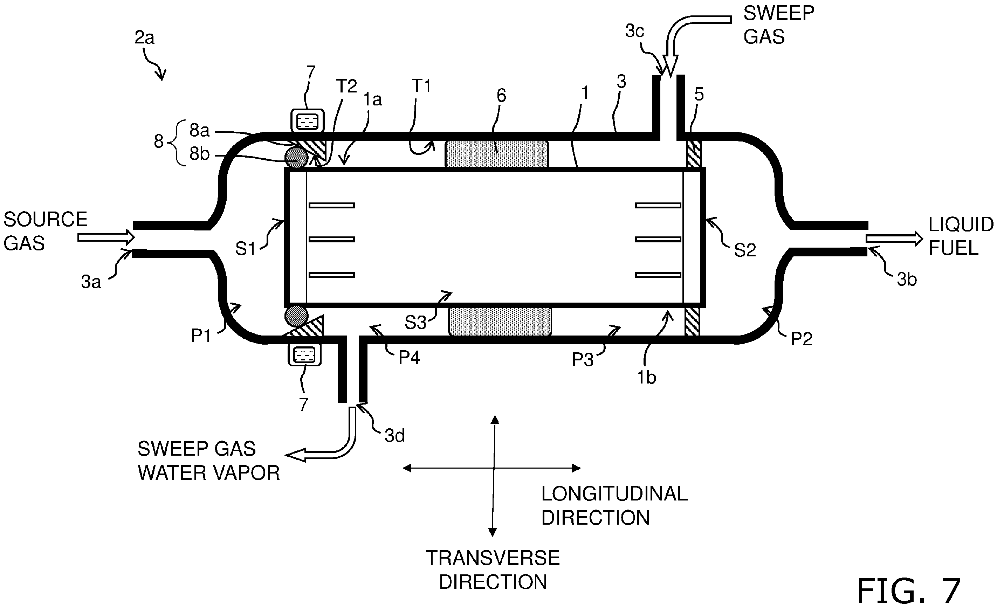

For example, as shown in FIG. 7, the membrane module 2a may include a first sealing portion 8 including a fixed portion 8a and an abutting portion 8b. The first sealing portion 8 seals a gap between the housing 3 and the first end portion 1a of the reactor 1. The first sealing portion 8 holds the first end portion 1a of the reactor 1.

The fixed portion 8a is an example of a "first fixed portion" according to the present invention. The fixed portion 8a has an annular shape. The fixed portion 8a is fixed to an inner surface T1 of the housing 3. The fixed portion 8a is disposed in such a manner as to protrude from the inner surface T1 of the housing 3. It is desirable that the fixed portion 8a is made of a material similar to the material of the housing 3, but there is no limitation to this configuration as long as the fixed portion 8a serves as a fixed portion. The fixed portion 8a has an inclined surface T2 facing the side surface S3 of the reactor 1. The inclined surface T2 is inclined with respect to the side surface S3. Specifically, the distance between the inclined surface T2 and the side surface S3 increases as the inclined surface T2 extends toward the first end surface S1 of the reactor 1.

The abutting portion 8b is an example of an "abutting portion" according to the present invention. The abutting portion 8b has an annular shape. The abutting portion 8b is attached to the side surface S3 of the reactor 1. The abutting portion 8b can move in the longitudinal direction along with the reactor 1.

The abutting portion 8b abuts against the inclined surface T2 of the fixed portion 8a. The abutting portion 8b is sandwiched between the fixed portion 8a and the side surface S3 of the reactor 1. Therefore, when the housing 3 expands in the longitudinal direction as a result of the coefficient of thermal expansion of the housing 3 being larger than the coefficient of thermal expansion of the reactor 1 when the membrane module 2a starts operating, the abutting portion 8b is pressed against the inclined surface T2 of the fixed portion 8a. Since the membrane module can cope with the expansion and contraction of the housing 3 while maintaining the holding ability and the sealing ability of the first sealing portion 8, the reactor 1 and the first sealing portion 8 can be kept from being damaged as a result of stress being applied thereto.

However, if a portion of the housing 3 that comes in contact with the first sealing portion 8 thermally expands in the transverse direction, the surface pressure between the fixed portion 8a and the abutting portion 8b decreases, which may decrease the sealing performance of the first sealing portion 8. In view of this, by cooling the portion of the housing 3 that comes in contact with the first sealing portion 8 in the refrigerant flow path 7, a decrease in the surface pressure between the fixed portion 8a and the abutting portion 8b can be suppressed, and as a result, a decrease in the sealing performance of the first sealing portion 8 can be suppressed.

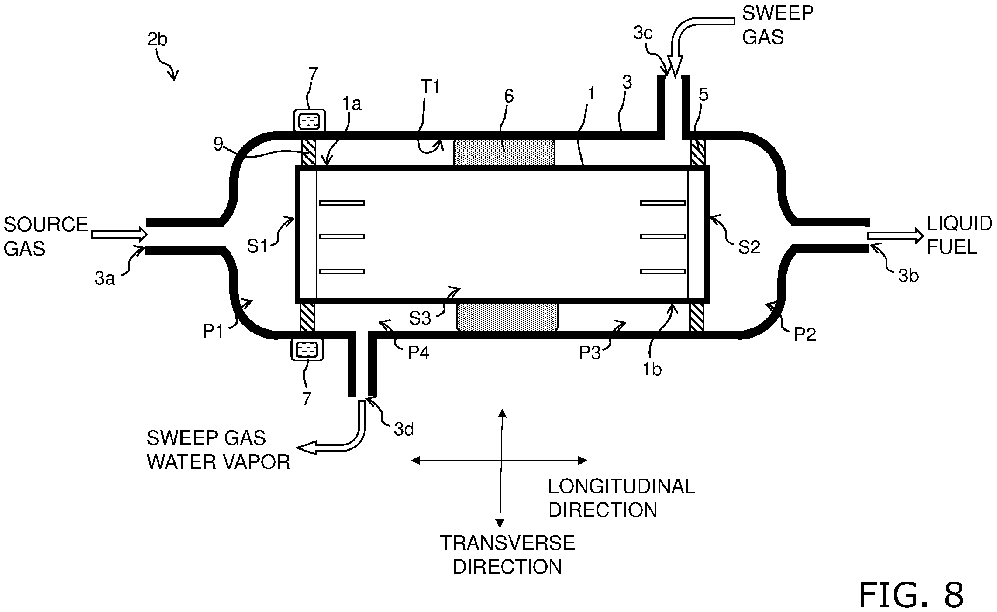

Further, as shown in FIG. 8, the membrane module 2b may include a first sealing portion 9 having a configuration similar to that of the second sealing portion 5. The first sealing portion 9 seals a gap between the housing 3 and the first end portion 1a of the reactor 1. The first sealing portion 9 holds the first end portion 1a of the reactor 1.

The first sealing portion 9 is connected to the side surface S3 of the reactor 1 and the inner surface T1 of the housing 3. The first sealing portion 9 has an annular shape. The first sealing portion 9 does not deform or move in the longitudinal direction. Examples of the material of the first sealing portion 9 include glass, silver solder, solder, and inorganic adhesives. Since the first sealing portion 9 is not exposed to a high temperature liquid fuel and water vapor, materials such as rubber and plastic may be used as the constituent material of the first sealing portion 9.

Since the first sealing portion 9 is connected to the side surface S3 of the reactor 1 and the inner surface T1 of the housing 3, if the housing 3 repeatedly expands and contracts in the transverse direction, the first sealing portion 9 may be damaged due to thermal stress, which may decrease the sealing performance of the first sealing portion 9. In view of this, by cooling the portion of the housing 3 that comes in contact with the first sealing portion 9 in the refrigerant flow path 7, damage to the first sealing portion 9 can be suppressed, and as a result, a decrease in the sealing performance of the first sealing portion 9 can be suppressed.

### Modification 2

In the first and second embodiments, the membrane module 2 includes a cooling portion (refrigerant flow path 7 or heat dissipation fin 7a) for cooling the portion of the housing 3 that comes in contact with first sealing portion 4, but in addition to this, the membrane module 2 may include a cooling portion for cooling a portion of the housing 3 that comes in contact with the second sealing portion 5. In this manner, by providing a cooling portion for each sealing portion, the sealing performance of all the sealing portions can be maintained.

### Modification 3

In the first and second embodiments, a monolith type reactor 1 was described as an example of a membrane structure, but the configuration of the membrane structure is not limited to this.

For example, the membrane structure may be a reactor other than a monolith type reactor. A representative example of a reactor other than a monolith type reactor is a tube type reactor (e.g., JP 2018-008940A), but there is no limitation to this.

Further, the membrane structure may be a separation membrane structure having a separation membrane permeable to a desired component contained in a mixed fluid. As the separation membrane structure, a known separation membrane structure (e.g., JP 2018-149471A, JP2019-76845A, and WO 2018/088064) may be used. In this manner, in the present invention, there is no limitation to the function and configuration of the membrane structure.

### Modification 4

In the first embodiment, the refrigerant flow path 7 is disposed outside the housing 3, but the refrigerant flow path 7 may also be disposed inside the housing 3.

### Modification 5

In the second embodiment, the membrane module 2a includes the heat dissipation fin 7a constituted by a plurality of fins, but the heat dissipation fin only needs to be constituted by at least one fin.

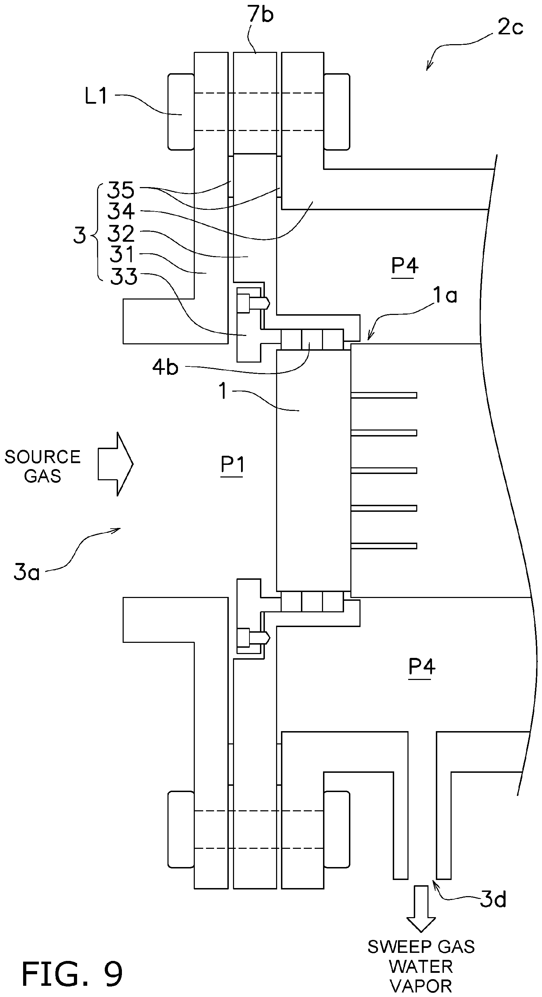

For example, as shown in FIG. 9, a membrane module 2c includes a reactor 1, a housing 3, a sealing portion 4b, and one heat dissipation fin 7b.

The configuration of the reactor 1 is as described in the above embodiments.

The housing 3 includes a flange 31, a support member 32, a pressing member 33, the tube body 34, and two flange gaskets 35. The flange 31 is an annular member in which a source gas supply port 3a is formed in the center thereof. The support member 32 is an annular member disposed between the flange 31 and the tube body 34. The support member 32 supports the sealing portion 4b. The pressing member 33 is fastened to the support member 32. The pressing member 33 presses the sealing portion 4b in the longitudinal direction of the reactor 1. The tube body 34 is a tubular member that surrounds the side surface of the reactor 1. The two flange gaskets 35 are disposed on opposite sides of the support member 32. Due to the flange gasket 35 disposed between the flange 31 and the support member 32, a gap is formed between the flange 31 and the support member 32. Due to the flange gasket 35 disposed between the support member 32 and the tube body 34, a gap is formed between the support member 32 and the tube body 34.

The sealing portion 4b is disposed between the reactor 1 and the support member 32. The sealing portion 4b has an annular shape, and surrounds the first end portion 1a of the reactor 1. The sealing portion 4b seals a gap between the first end portion 1a of the reactor 1 and the support member 32. A so-called grand packing can be used as the sealing portion 4b. The grand packing can be made of expanded graphite, for example. Due to the sealing portion 4b being compressed by the pressing member 33, the sealing portion 4b exhibits the sealing property. The sealing property of the sealing portion 4b can be adjusted with use of the fastening force that the pressing member 33 applies to the support member 32.

The heat dissipation fin 7b is an annular member disposed between the flange 31 and the tube body 34. In the present embodiment, the heat dissipation fin 7b is fastened by a fastening tool L1 together with the flange 31 and the tube body 34. The heat dissipation fin 7b is formed on the outer surface of the housing 3. Specifically, the heat dissipation fin 7b is connected to the outer periphery of the support member 32. The heat dissipation fin 7b may be formed in one piece with the support member 32.

The heat dissipation fin 7b is an example of a "cooling portion" according to the present invention. The heat dissipation fin 7b cools a portion of the housing 3 that comes in contact with the sealing portion 4b (specifically, cools the support member 32). In this manner, of the housing 3, transverse thermal expansion of the support member 32 that comes in contact with the sealing portion 4b can be locally suppressed, and thus a decrease in the surface pressure between the support member 32 and the sealing portion 4b can be suppressed. As a result, a decrease in the sealing performance of the sealing portion 4b can be suppressed.

As described above, the cooling structure of the first end portion 1a of the reactor 1 is described with reference to FIG. 9. However, the cooling structure shown in FIG. 9 may also be applied on the second end portion 1b side of the reactor 1, or only on the second end portion 1b side of the reactor 1.

### Modification 6

In the first embodiment, the refrigerant flow path 7 is described as an example of a "cooling portion", and in the second embodiment and Modification 5, the heat dissipation fins 7a and 7b are described as an example of a "cooling portion", but a "cooling portion" is not limited thereto.

For example, a ventilation hole formed in the sealing portion 4b shown in FIG. 9 may be used as a "cooling portion". Specifically, if the sealing portion 4b is a grand packing, by loosening the fastening force that the pressing member 33 applies to the support member 32, a portion of the sealing portion 4b loses its sealing property and serves as a ventilation hole. A portion of a high-pressure source gas that flows into the first space P1 via the source gas supply port 3a flows out to the fourth space P4 via the ventilation hole of the sealing portion 4b. At this time, since the temperature of the source gas drops due to adiabatic expansion of the source gas, a portion of the housing 3 that is in contact with the sealing portion 4b is cooled (specifically, the support member 32 is cooled).

Alternatively, the ventilation hole formed in the housing 3 may also be used as a "cooling portion". For example, although not shown in FIG. 9, a ventilation hole that is in communication with the first space P1 and the fourth space P4 may also be formed in the support member 32. At this time, since the temperature of the source gas drops due to adiabatic expansion of the source gas that passes through the ventilation hole of the support member 32, a portion of the housing 3 that is in contact with the sealing portion 4b is cooled (specifically, the support member 32 itself is cooled).

### Modification 7

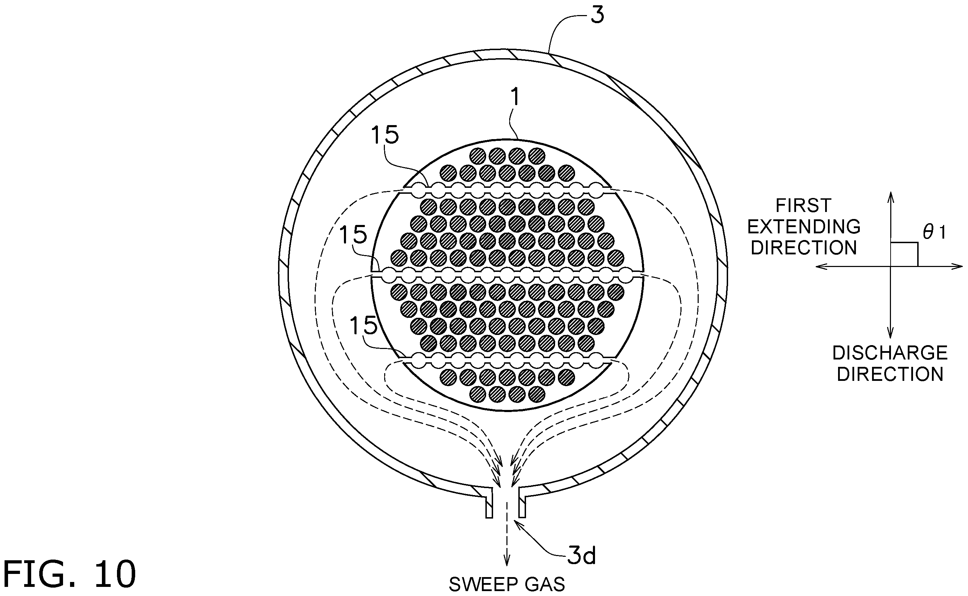

FIG. 10 is a cross-sectional view of the membrane module 2 shown in FIG. 1. FIG. 10 shows a cross section perpendicular to the axis of the reactor 1.

As shown in FIG. 10, a first extending direction in which the outlet slits 15 extend inside the reactor 1 is preferably inclined or orthogonal with respect to a discharge direction in which the sweep gas is discharged via the sweep gas discharge port 3d to the outside. Specifically, an angle θ1 of the first extending direction with respect to the discharge direction is preferably 45° or more and 135° or less. With this configuration, it is possible to suppress maldistribution of gas flows from the opening portions on both sides of the outlet slits 15 toward the sweep gas discharge port 3d, and accordingly, it is possible to suppress maldistribution of flows of the sweep gas.

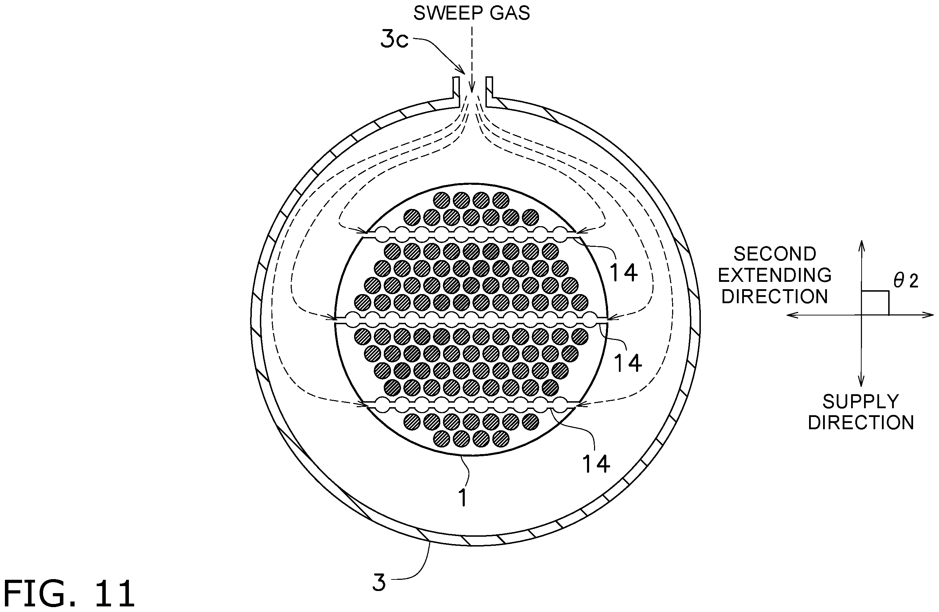

FIG. 11 is a cross-sectional view of the membrane module 2 shown in FIG. 1. FIG. 11 shows a cross section perpendicular to the axis of the reactor 1.

As shown in FIG. 11, a second extending direction in which the inlet slits 14 extend inside the reactor 1 is preferably inclined or orthogonal with respect to a supply direction in which the sweep gas is supplied via the sweep gas supply port 3c. Specifically, an angle θ2 of the second extending direction with respect to the supply direction is preferably 45° or more and 135° or less. With this configuration, it is possible to suppress maldistribution of gas flows from the sweep gas supply port 3c toward the opening portions on both sides of the inlet slits 14, and accordingly, it is possible to suppress maldistribution of flows of the sweep gas.

### Modification 8

In the first and second embodiments described above, the separation membrane 30 is permeable to water vapor, which is one of the products generated as a result of the conversion reaction in which the source gas is converted into the liquid fuel, but there is not limitation to this configuration. The separation membrane 30 may also be permeable to the liquid fuel generated as a result of the conversion reaction in which the source gas is converted into the liquid fuel. In this case as well, it is possible to shift the reaction equilibrium of the above formula (1) to the product side.

Also, in the case where the separation membrane 30 is permeable to the liquid fuel, the reaction equilibrium can be shifted to the product side even when the liquid fuel is generated as a result of a reaction in which no water vapor is generated (e.g., 2H₂+CO ⇄ CH₃OH).

### REFERENCE SIGNS LIST

- 1: Reactor
- 2, 2a, 2b: Membrane module
- 3: Housing
- 3a: Source gas supply port
- 3b: Liquid fuel discharge port
- 3c: Sweep gas supply port
- 3d: Sweep gas discharge port
- 5: Second sealing portion
- 6: Flow Stopper
- 7: Refrigerant flow path
- 7a: Heat dissipation fin
- 4, 8, 9: First sealing portion
- 8a: Fixed portion
- 8b: Abutting portion
- 10: Porous support
- 20: Catalyst
- 30: Separation membrane

## Claims

1. A membrane module comprising:
a housing;
a membrane structure housed in the housing;
a sealing portion configured to seal a gap between the housing and the membrane structure; and
a cooling portion configured to cool a portion of the housing in contact with the sealing portion.

2. The membrane module according to claim 1, wherein
the cooling portion is a refrigerant flow path in which a refrigerant circulates.

3. The membrane module according to claim 2, wherein
the refrigerant flow path is disposed outside the housing.

4. The membrane module according to claim 1, wherein
the cooling portion is a heat dissipation fin formed on an outer surface of the housing.

5. The membrane module according to claim 1, wherein
the cooling portion is a ventilation hole formed in the housing or the sealing portion.

6. The membrane module according to claim 1, wherein
the membrane structure is a reactor having a separation membrane permeable to water vapor, the water vapor being a product of a conversion reaction in which a source gas containing hydrogen and carbon dioxide is converted to a liquid fuel.

7. The membrane module according to claim 1, wherein
the membrane structure is a separation membrane structure having a separation membrane permeable to a desired component contained in a mixed fluid.

8. The membrane module according to claim 1, wherein
the sealing portion can move in a longitudinal direction together with the membrane structure.

9. The membrane module according to claim 8, wherein
the sealing portion is an O-ring constituted by an elastic member.

10. The membrane module according to claim 8, wherein
the sealing portion includes:
an annular fixed portion fixed to an inner surface of the housing and having an inclined surface facing a side surface of the membrane structure, and
an annular abutting portion attached to the side surface and abutting the inclined surface.
